# EUROPEAN PATENT APPLICATION

(11) **EP 2 735 476 A2**
(43) Date of publication of application: **28.05.2014**
(21) Application number: 13192855.8
(22) Date of filing: 14.11.2013
(51) Int. Cl.: B60Q 1/26, F21S 8/10, F21V 8/00

(54) **Vehicular lamp**

(30) Priority: 21.11.2012 JP 2012255091
(71) Applicant: Koito Manufacturing Co., Ltd., Tokyo 108-8711 (JP)
(72) Inventor: Takahashi, Haruhito, Shizuoka-shi, Shizuoka (JP); Kazaoka, Shigehiko, Shizuoka-shi, Shizuoka (JP)
(74) Representative: Finnie, Peter John

(57) **Abstract**

A vehicular lamp includes a light source (15) configured to emit light, and a light guide lens (9) configured to guide the light from the light source (15) and to emit the light to the periphery of a vehicle, the light guide lens (9) including a light distributing portion (20) configured to emit illumination light in a predetermined direction on the periphery of the vehicle, a decorative portion (21) configured to emit decorative light in a different direction from the direction in which the illumination light is emitted, and a slit (22) configured to divide the light guide lens (9) into the light distributing portion (20) and the decorative portion (21). Direct light from the light source (15) is incident on the light distributing portion (20) while light that leaks out of the light distributing portion (20) is incident on the decorative portion (21).

## Description

### BACKGROUND

### TECHNICAL FIELD

The present disclosure relates to a vehicular lamp in which light from a light source is passed through a light guide lens to thereby be emitted to the periphery of a vehicle and more particularly to a vehicular lamp in which a light guide lens is divided into a light distributing portion and a decorative portion.

### RELATED ART

A vehicular lamp is known in which a light guide lens is divided into a light distributing portion and a decorative portion, so that different functional lights are emitted from the light distributing portion and the decorative portion. For example, in a side turn signal lamp described in Patent Literature 1, an outer lens is provided on a front surface of a lamp body which is mounted in a side mirror, and a light guiding inner lens is disposed inside the outer lens. A light distributing portion and a decorative portion are formed into a bent shape such as a "V" shape in the light guiding inner lens. A LED for light distribution and a LED for decoration are provided inside the bent portion so as to be oriented differently. Light emitted from the LED for light distribution is transmitted to the light distributing portion so as to be emitted to the rear of the vehicle, while light emitted from the LED for decoration is transmitted to the decorative portion so as to be emitted to the front of the vehicle.

### [Related Art Literature]

### [Patent Literature]

[Patent Literature 1] JP-A-2010-52566

According to the related-art vehicular lamp, however, light sources need to be provided separately in the light distributing portion and the decorative portion of the light guide lens. Therefore, the production cost of the vehicular lamp has to be increased. In addition, in the related-art bent light guide lens, when attempting to using a single light source for both the light distributing portion and the decorative portion, in the case of a side turn signal lamp, in particular, the quantity of light at the light distributing portion becomes insufficient, so that a regulated quantity of light cannot be distributed to the rear of the vehicle.

### SUMMARY

Exemplary embodiments of the invention provide a vehicular lamp which can reduce the production cost thereof by using a common light source for a light distributing portion and a decorative portion and which can distribute required amounts of illumination light and decorative light to the light distributing portion and the decorative portion, respectively.

According to the invention, in a vehicular lamp in which light from a light source is passed through a light guide lens to thereby be emitted to the periphery of a vehicle, the following means will be adopted.

(1) A vehicular lamp comprises:
a light source configured to emit light; and
a light guide lens configured to guide the light from the light source and to emit the light to the periphery of a vehicle, the light guide lens including a light distributing portion configured to emit illumination light in a predetermined direction on the periphery of the vehicle, a decorative portion configured to emit decorative light in a different direction from the direction in which the illumination light is emitted, and a slit configured to divide the light guide lens into the light distributing portion and the decorative portion, wherein
direct light from the light source is incident on the light distributing portion while light that leaks out of the light distributing portion is incident on the decorative portion.

(2) The light distributing portion may comprise an incident surface and an emitting surface on an optical axis of the light source. Therefore, a larger amount of light can be distributed to the light distributing portion than to the decorative portion.

(3) The slit may be formed in the light guide lens so as to get deeper in the direction of the optical axis of the light source. In this case, the slit may be formed so as to get deeper from a front surface towards a back surface side of the light guide lens. In contract with this, the slit can also be formed so as to get deeper from the back surface towards the front surface side of the light guide lens. In addition, the slit can also be formed so as to extend in a longitudinal direction from an end face of the light guide lens while getting deeper.

(4) The light distributing portion and the decorative portion may comprise interfaces which stand substantially parallel to face each other via the slit. Here, the interface means a boundary surface between a light transmitting material which makes up the light guide lens and air contained in the slit. By designing the interface so as to increase the surface area thereof, a relatively large quantity of light is allowed to leak from the light distributing portion so as to be distributed to the decorative portion. On the contrary, by designing the interface so as to reduce the surface area thereof, a relatively small quantity of light is allowed to leak from the light distributing portion so as to be distributed to the decorative portion. The quantity of light that leaks form the light distributing portion can be adjusted arbitrarily according to the application and design of a vehicular lamp.

(5) The light distributing portion may be disposed further rearwards towards the rear of the vehicle than the decorative portion. This vehicular lamp can preferably be applied to a side turn signal lamp mounted in a side mirror of a vehicle which is required to distribute a large quantity of light to the rear of the vehicle by a regulation.

According to the vehicular lamp of the exemplary embodiment, the light distributing portion and the decorative portion are formed in a divided fashion in the light guide lens, and direct light from the light source is incident on the light distributing portion, while light which leaks from the light distributing portion is incident on the decorative portion. Therefore, the vehicular lamp of the exemplary embodiment can provide a superior advantage that the common light source is used for the light distributing portion and the decorative portion so that not only can the production cost be reduced but also required quantities of light can be distributed to the light distributing portion and the decorative portion.

### BRIEF DESCRIPTION OF THE DRAWINGS

Fig. 1 is a front view showing a side turn signal lamp of an exemplary embodiment viewed from obliquely front.
Fig. 2 is an enlarged cross-sectional view taken along II-II line of Fig. 1.
Fig. 3 is a horizontal cross-sectional view of a side turn signal lamp of an exemplary Embodiment 1.
Fig. 4 is a horizontal cross-sectional view of a side turn signal lamp of a modified example.
Fig. 5 is a horizontal cross-sectional view of the side turn signal lamp of an exemplary Embodiment 2.

### DETAILED DESCRIPTION

Hereinafter, exemplary embodiments will be described by reference to the drawings in which the invention is embodied into a side turn signal lamp mounted in a side mirror of a vehicle.

### [Embodiment 1]

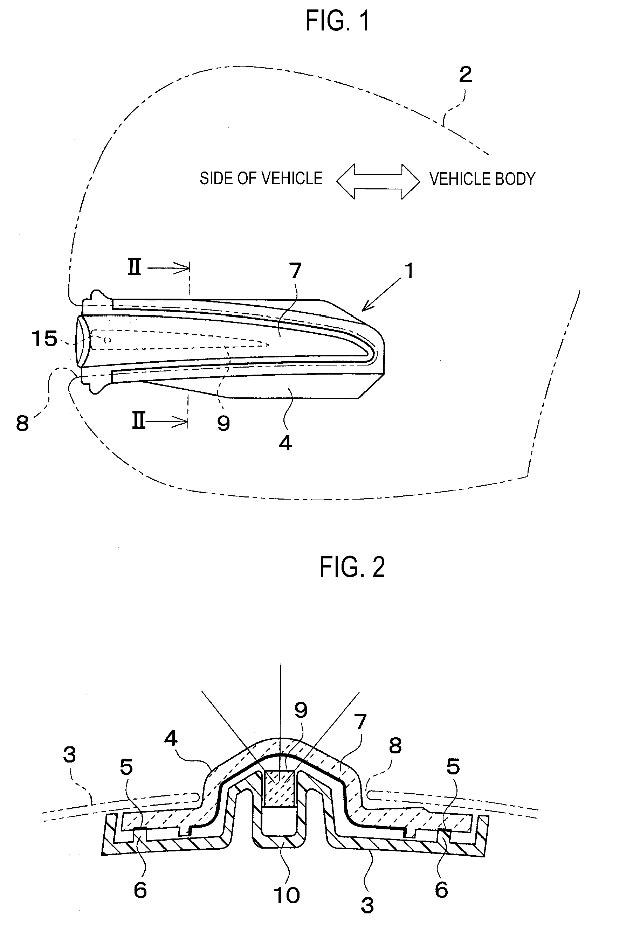

A side turn signal lamp 1 of Embodiment 1 shown in Figs. 1, 2 includes a lamp body 3 which is built in an interior of a side mirror 2. An outer lens 4 is placed on a front surface of the lamp body 3 and is then bonded to ribs 6 of the lamp body 3 via vibration weld portions 5. A horizontally elongated protrusion portion 7 is formed in the outer lens 4 so as to be exposed from an opening portion 8 in the side mirror 2. A light guide lens 9 is disposed inside the horizontally elongated protrusion portion 7 and is positioned and held at a holding portion 10 of the lamp body 3.

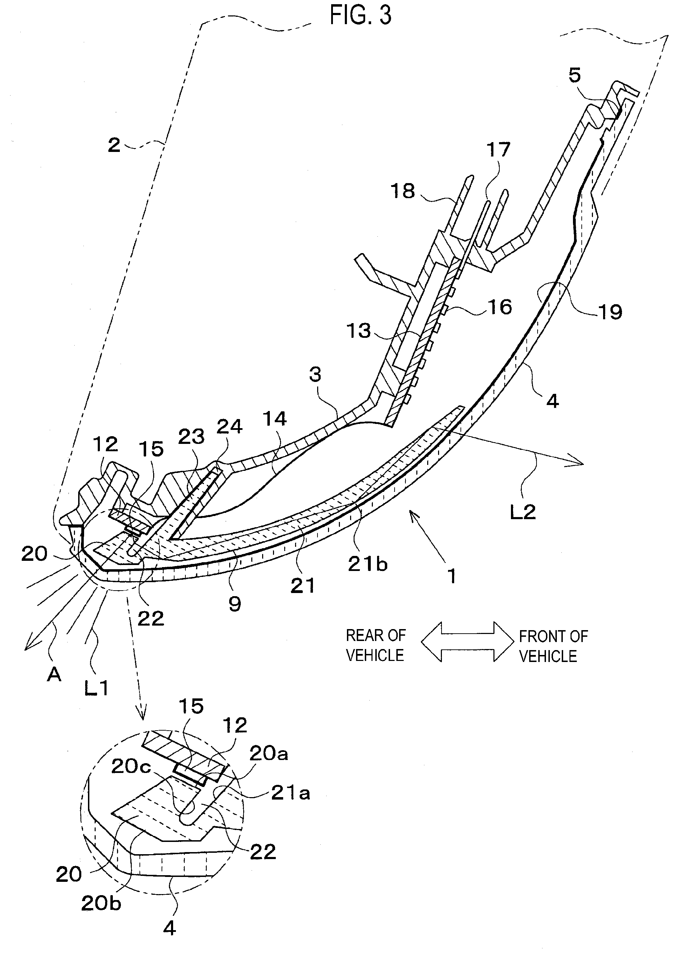

As shown in Fig. 3, in the lamp body 3, a light source circuit board 12 and a power supply circuit board 13 are disposed so as to be separated in a front-to-rear or longitudinal direction of the vehicle and are connected by an electric wiring 14. A single LED light source 15 is mounted on the light source circuit board 12 so as to be oriented in the longitudinal direction of the vehicle. A circuit element 16 and a connector pin 17 are provided on the power supply circuit board 13, and a socket 18 is provided on an external surface of the lamp body 3 so as to project therefrom. In order to make parts including the circuit boards 12, 13 within a lamp chamber invisible from the outside, an aluminum-deposited layer 19 is formed (half deposited) over almost the whole area of an inner surface of the outer lens 4 to such a thickness that does not interrupt the transmissivity of the outer lens 4.

The light guide lens 9 is molded from a light transmitting resin material into a thin elongated shape extending in the longitudinal direction of the vehicle. The light guide lens 9 includes a light distributing portion 20 which emits illumination light L1 to the rear of the vehicle, a decorative portion 21 which emits decorative light L2 to the front of the vehicle, and a slit 22 which divides the light guide lens 9 into the light distributing portion 20 and the decorative portion 21. The light distributing portion 20 is disposed further rearwards towards the rear of the vehicle than the decorative portion 21. The light distribution portion 20 includes an incident surface 20a and an emitting surface 20b which are formed on an optical axis A of the LED light source 15. Direct light from the light source 15 are incident on the incident surface 20a and then emitted from the emitting surface 20b as illumination light L1. The decorative portion 21 includes an incident surface 21a and an emitting surface 21b. Light which leaks out of the light distributing portion 20 into the slit 22 is incident on the incident surface 21a and then emitted from the emitting surface 21b as decorative light L2.

The slit 22 is cut from a back surface towards a front surface side of the light guide lens 9 so as to get deeper in a direction parallel to the optical axis A of the LED light source 15. In other words, the slit 22 extends from the back surface towards the front back surface side of the light guide lens 9 along the direction parallel to the optical axis A of the LED light source 15. Interfaces are formed on the light distributing portion 20 and the decorative portion 21 which stand parallel to face each other via the slit 22, and light which leaks from an interface 20c of the light distributing portion 20 are incident on the interface or the incident surface 21a of the decorative portion 21. The incident surface 21a of the decorative portion 21 is formed on a leg portion 23 of the light guide lens 9. The leg portion 23 is fitted in a positioning hole 24 in the lamp body 3, whereby the incident surface 20a of the light distributing portion 20 is held in a position which faces the LED light source 15. In the light guide lens 9, direct light from the LED light source 15 is incident on the light distributing portion 20 and light that leaks from the light distributing portion 20 is incident on the decorative portion 21.

Consequently, according to the side turn signal lamp 1 configured in the way described above, the following functions and advantages can be obtained.
(a) With the inexpensive configuration in which the single LED light source 15 is used, the illumination light L1 can be emitted from the light distributing portion 20, while the decorative light L2 can be emitted from the decorative portion 21.
(b) The light distributing portion includes the incident surface 20a and the emitting surface 20b which are formed on the optical axis A of the LED light source 15. Direct light from the LED light source 15 is incident on the light distributing portion 20. Therefore, a sufficient quantity of illumination light L1 which is required by a regulation can be emitted to illuminate brightly the rear of the vehicle.
(c) Light that leaks from the light distributing portion 20 is incident on the decorative portion 21. Therefore, a front surface of the side mirror 2 can be decorated to exhibit a good external appearance with a small quantity of decorative light L2 which is smaller the quantity of illumination light L1 emitted from the light distributing portion 20.

(d) The slit 22 is formed so as to get deeper in the direction parallel to the optical axis A of the LED light source 15, and therefore, a preferred light distribution pattern for the side turn signal lamp 1 can be formed by increasing relatively the quantity of light distributed to the rear of the vehicle and reducing relatively the quantity of light distributed to the front of the vehicle.
(e) The interfaces 20c, 21c are formed on the light distributing portion 20 and the decorative portion 21 so as to stand parallel to face each other via the slit 22. Therefore, by adjusting the surface areas of the interfaces 20c, 21c, a distribution ratio of the illumination light L1 to the decorative light L2 can easily be adjusted.

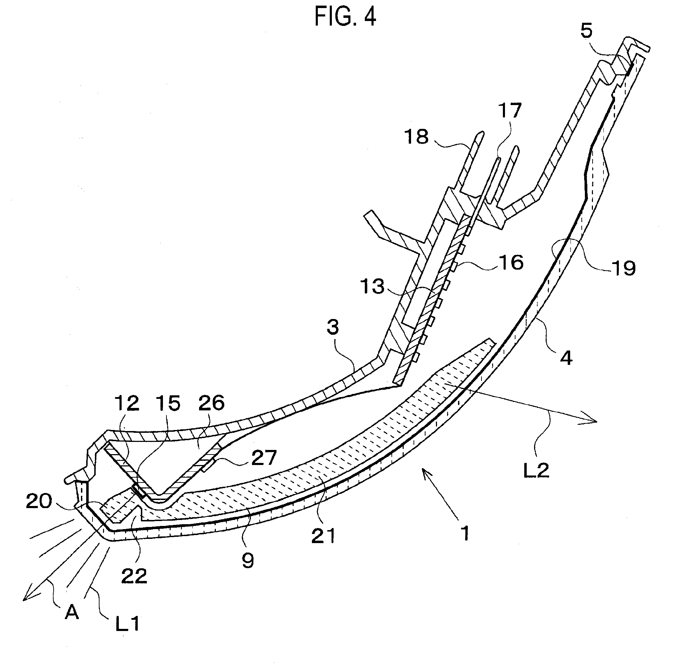

Fig. 4 shows a modified example made to the side turn signal lamp 1 of Embodiment 1. Here, a slit 22 is formed so as to get deeper from a front surface towards a back surface side of a light guide lens 9. A light source circuit board 12 is formed so as to be bent into an L-shape and is fixed to a mounting base 26 of a lamp body 3 through a thermal caulking 27. The other configurations of this modified example are the same as those of the side turn signal lamp 1 shown in Fig. 3, and almost the same functions and advantages as those obtained by the side turn signal lamp 1 can be expected to be obtained.

### [Embodiment 2]

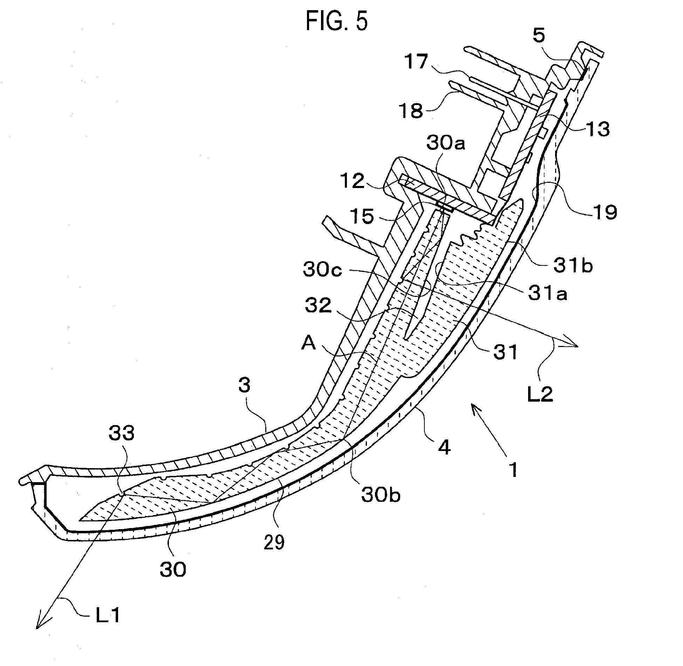

In a side turn signal lamp 1 of Embodiment 2 shown in Fig. 5, a light source circuit board 12, a power supply circuit board 13 and a socket 18 are provided on an end portion of a vehicle body side of a lamp body 3, and an LED light source 15 is mounted on the light source circuit board 12 so as to be oriented to the rear of the vehicle. The light guide lens 29 includes a light distributing portion 30 which emits illumination light L1 to the rear of the vehicle, a decorative portion 31 which emits decorative light L2 to the front of the vehicle, and a slit 32 which divides the light guide lens 29 into the light distributing portion 30 and the decorative portion 31. The slit 32 is cut towards the obliquely rear from an end face of a vehicle body side of the light guide lens 29 so as to get deeper in a direction parallel to an optical axis A of the LED light source 15. In other words, the slit 32 extends from the end face of the vehicle body side towards the obliquely rear of the light guide lens 29 along the direction parallel to the optical axis A of the LED light source 15. The decorative portion 31 is disposed at a front side of the slit 32, and the light distributing portion 30 is disposed further rearwards towards the rear of the vehicle than the decorative portion 31.

The light distributing portion 30 includes an incident surface 30a and an emitting surface 30b which are formed on the optical axis A of the LED light source 15. Direct light from the LED light source 15 is incident on the incident surface 30a and then emitted from the emitting surface 30b as illumination light L1. The decorative portion 31 includes an incident surface 31a and an emitting surface 31b. Light which leaks out of the light distributing portion 30 into the slit 32 is incident on the incident surface 31a and then emitted from the emitting surface 31b as decorative light L2. Interfaces are formed on the light distributing portion 30 and the decorative portion 31 so as to stand parallel to face each other via the slit 32, and light that leaks from the interface 30c of the light distributing portion 30 is incident on the interface (the incident surface) 31a of the decorative portion 31. In addition, a plurality of steps 33 are formed on a back surface of the light distributing portion 30 so as to scatter light which is totally reflected at the emitting surface 30b towards an outer lens 4.

In the light guide lens 29, direct light from the LED light source 15 is incident on the light distributing portion 30 and light that leaks from the light distributing portion 30 is incident on the decorative portion 31. Consequently, according to the side turn signal lamp 1 of Embodiment 2, compared with Embodiment 1, the light distributing portion 30 is formed long towards the rear of the vehicle, while the decorative portion 31 is formed short towards the front of the vehicle. Thus, the rear and side of the vehicle can be illuminated brightly with the illumination light L1 which is formed into a belt-like shape, while the front of the vehicle can be decorated so as to exhibit a good external appearance with the decorative light L2 which is formed into a spot-like shape. The other functions and advantages are the same as those of Embodiment 1.

It is noted that the application of the invention is not limited to the side turn signal lamp 1. The invention can also be applied to lamps mounted in various portions of the vehicle such as, for example, a clearance lamp, a daytime running lamp, and a rear combination lamp. In addition, the shape of the light guide lens can also be modified as required without departing from the spirit and scope of the invention.

## Claims

1. A vehicular lamp comprising:
a light source (15) configured to emit light; and
a light guide lens (9) configured to guide the light from the light source (15) and to emit the light to the periphery of a vehicle, the light guide lens (9) including a light distributing portion (20) configured to emit illumination light in a predetermined direction on the periphery of the vehicle, a decorative portion (21) configured to emit decorative light in a different direction from the direction in which the illumination light is emitted, and a slit (22) configured to divide the light guide lens (9) into the light distributing portion (20) and the decorative portion (21), wherein
direct light from the light source (15) is incident on the light distributing portion (20) while light that leaks out of the light distributing portion (20) is incident on the decorative portion (21).

2. The vehicular lamp according to Claim 1, wherein
the light distributing portion (20) comprises an incident surface (20a) and an emitting surface (20b) on an optical axis (A) of the light source (15).

3. The vehicular lamp according to Claim 2, wherein
the slit (22) is formed in the light guide lens (9) so as to get deeper in the direction of the optical axis (A) of the light source (15).

4. The vehicular lamp according to Claim 3, wherein
the light distributing portion (20) and the decorative portion (21) comprise interfaces (20c, 21a) which stand substantially parallel to face each other via the slit (22).

5. The vehicular lamp according to any one of Claims 1 to 4, wherein the light distributing portion (20) is disposed further rearwards towards the rear of the vehicle than the decorative portion (21).
